# NEUE EUROPÄISCHE PATENTSCHRIFT

(11) **EP 2 357 349 B2**
(45) Veröffentlichungstag und Bekanntmachung des Hinweises auf die Entscheidung über den Einspruch: **05.09.2018**
(45) Hinweis auf die Patenterteilung: 28.05.2014
(21) Anmeldenummer: 10014591.1
(22) Anmeldetag: 13.11.2010
(51) Int. Cl.: F02G 5/00, F01K 23/06, F01N 5/02

(54) **System zur Abwärmenutzung einer Brennkraftmaschine mit Einfrierschutzeinrichtung**
System for using the waste heat of a combustion engine with anti-freeze device
Système d'utilisation de la chaleur dégagée d'un moteur à combustion interne doté d'un dispositif de protection antigel

(30) Priorität: 15.01.2010 AT 462010
(43) Veröffentlichungstag der Anmeldung: 17.08.2011
(73) Patentinhaber: MAN Truck & Bus Österreich GesmbH, 4400 Steyr (AT)
(72) Erfinder: Raab, Gottfried, 4320 Perg (AT); Raup, Markus, 4800 Attnang-Puchheim (AT); Klammer, Josef, 4451 Garsten (AT)
(74) Vertreter: Liebl, Thomas

(56) Entgegenhaltungen:
- DE-A1-102009 003 850
- GB- - 1 337 629
- US-A- 4 300 353
- US-A- 5 191 766
- US-A- 5 191 766

## Beschreibung

### Technisches Gebiet:

Die Erfindung betrifft ein Verfahren sowie eine Vorrichtung zur Abwärmenutzung einer Brennkraftmaschine mit einem Abwärmekreislauf, in dem ein Arbeitsmedium umgewälzt wird und durch den Abwärme der Brennkraftmaschine in mechanische Arbeit umgewandelt wird. Der Abwärmekreislauf verfügt über einen Verdampfer, in dem das Arbeitsmedium zumindest teilweise in einen dampfförmigen Aggregatzustand überführt wird, über eine Expandereinheit zur Bereitstellung der mechanischen Arbeit, in der das zumindest teilweise dampfförmige Arbeitsmedium entspannt wird, und über einen Kondensator, in dem das Arbeitsmedium in einen flüssigen Aggregatzustand überführt wird.

### Stand der Technik:

Um Kraftstoffeinsparungen, insbesondere bei mobilen Brennkraftmaschinen, wie etwa Kraftfahrzeugverbrennungsmotoren, realisieren zu können, werden derzeit vornehmlich zwei technische Lösungen priorisiert. Neben dem Einsatz unterschiedlicher Hybridkonzepte, die sich vor allem für den Stadt- und Verteilerverkehr aufgrund der dort vorkommenden Brems- und Beschleunigungsvorgänge anbieten, sind ferner Wärmerückgewinnungssysteme bekannt, die die Abwärme einer Brennkraftmaschine nutzen, um zusätzliche Antriebsenergie bereitzustellen. Derartige Systeme zur Abwärmenutzung bieten sich bei mobilen Brennkraftmaschinen vor allem für Fahrzeuge, die im Fernverkehr betrieben werden, an.

In diesem Zusammenhang ist aus der DE 10 2006 043 139 A1 ein Wärmerückgewinnungssystem für einen Verbrennungsmotor bekannt, bei dem die im Bereich der Brennkraftmaschine anfallende Abwärme an einen sekundären Wärmekreislauf, in dem ein Arbeitsmedium umgewälzt wird, bekannt. Die im Bereich der Brennkraftmaschine anfallende Abwärme wird zunächst in einem Verdampfer des sekundären Wärmekreislaufs an das Arbeitsmedium übertragen, das hierdurch in einen weitgehend dampfförmigen Aggregatzustand umgewandelt wird. Das dampfförmige Arbeitsmedium wird schließlich in einer Expandereinheit, die die Wärmeenergie in mechanische Arbeit umwandelt, entspannt, so dass dem Fahrzeug zusätzliche Antriebsenergie aus der Abwärme der Brennkraftmaschine zur Verfügung gestellt werden kann. Nach Entspannung im Expander wird das Arbeitsmedium des sekundären Wärmekreislaufes in einen Kondensator gefördert, in dem es unter Wärmeabgabe verflüssigt wird, so dass der entsprechende Dampfkreisprozess geschlossen ist.

Als Arbeitsmedien für die Anwendung in Abwärmenutzungskreisläufen kommen grundsätzlich alle aus der Prozessthermodynamik bekannten Fluide, wie etwa Alkohole, Kohlenwasserstoffe, Kohlenstoff-Fluor-Verbindungen oder bekannte Sicherheitsarbeitsmittel, in Frage. Aufgrund der thermodynamischen und physikalischen Eigenschaften sowie der einfachen und preisgünstigen Verfügbarkeit wurde allerdings dazu übergegangen, auch in Abwärmenutzungssystemen entionisiertes Wasser als Arbeitsmedium zu verwenden.

Ein großer Nachteil von Wasser, vor allem in mobilen Anwendungen solcher Systeme, ist die Einfrierproblematik des Mediums. Hierbei sind vor allem die Bereiche des sekundären Wärmekreislaufs gefährdet, in denen das Medium im flüssigen Zustand unter hohem Druck steht. Die in diesen Abschnitten des bwärmenutzungskreislaufes befindlichen Komponenten und Bauteile müssen einerseits eine hohe Steifigkeit aufgrund des hohen Druckes aufweisen und andererseits so flexibel sein, dass durch eine Volumenausdehnung des frierenden Wassers die Komponenten nicht beschädigt werden.

Weiter ist aus der US 4,300,353 ein Aufbau bekannt, bei dem eine Nutzung der Abwärme von Verbrennungskraftmaschinen in einem separaten Arbeitskreislauf erfolgt. In diesem separaten Arbeitskreislauf ist ein Kondensator angeordnet, der vertikale Stahlröhren mit Außenrippen aufweist. Diese Stahlrohre sind so dimensioniert, dass sie ausreichend stark sind, um den Innendruck auszuhalten. Dabei wird ihre geometrische Anordnung so gewählt, dass beim Gefrieren von Wasser keine Beschädigungen auftreten können. Die vertikalen Kondensatorröhren sind zwischen Rohrverbindern an der Oberseite und am Boden eingesetzt. Der Bodenbereich ist flexibel ausgebildet, um das sich beim Gefrieren ausdehnende Wasser aufzunehmen.

Weiter ist aus der US 5,191,766 ein anderes Abwärmenutzungskonzept bekannt, bei dem am Auslasskrümmer separate Wasser-Zuführleitungen angeordnet sind, die über Ventile Wasser in den Abgasstrom eindüsen können, um ein Abgas/Heißwasserdampfgemisch zur Verfügung zu stellen. Bei bestimmten niedrigen Temperaturen, die mittels eines Thermostats erfasst werden, kann das Gemisch in einen Kondensator eingeleitet werden, um dort die Wassertemperatur zu erhöhen.

Ausgehend von der aus dem Stand der Technik bekannten Problematik liegt der Erfindung die Aufgabe zugrunde, ein Abwärmenutzungssystem für eine Brennkraftmaschine anzugeben, das unabhängig von den Umgebungstemperaturen betriebssicher betreibbar ist. Hierbei sollen insbesondere die Hochdruckkomponenten des als sekundärer Wärmekreislauf ausgeführten Abwärmenutzungskreislaufes trotz erhöhter Anforderungen an die Betriebssicherheit im Hinblick auf ihre konstruktive Gestaltung sowie die Materialauswahl mit verhältnismäßig einfachen Mitteln sicher gegen ein Einfrieren geschützt werden. Ein Abwärmenutzungssystem einer Brennkraftmaschine, insbesondere eines Verbrennungsmotors eines Kraftfahrzeugs, soll auf verhältnismäßig einfache Weise bei unterschiedlichen Temperaturen sowohl im Kurzzeitals auch im Langzeitbetrieb sicher betreibbar sein.

Die zuvor beschriebene Aufgabe wird mit einer Vorrichtung gemäß Anspruch 1 und einer Vorrichtung gemäß Anspruch 2 gelöst. Ferner ist eine vorteilhafte Verwendung im Anspruch 12 angegeben. Vorteilhafte Ausführungsformen der Erfindung sind Gegenstand der abhängigen Ansprüche und werden in der folgenden Beschreibung unter teilweiser Bezugnahme auf die Figuren näher erläutert.

Gemäß Anspruch 1 und Anspruch 2 ist jeweils eine Vorrichtung zur Abwärmenutzung einer Brennkraftmaschine mit einem Abwärmekreislauf, in dem ein Arbeitsmedium umgewälzt wird und durch die Abwärme der Brennkraftmaschine und/oder Abgaswärme in mechanische Arbeit umgewandelt wird, wobei in dem Abwärmekreislauf ein Verdampfer, in dem das Arbeitsmedium durch Aufnahme von Abwärme der Brennkraftmaschine zumindest teilweise in einen dampfförmigen Aggregatzustand überführt wird, eine Expandereinheit zur Bereitstellung der mechanischen Arbeit, in der das zumindest teilweise dampfförmige Arbeitsmedium entspannt wird und ein Kondensator, in dem das Arbeitsmedium in einen flüssigen Aggregatzustand überführt wird, derart ausgebildet worden, dass im Abwärmekreislauf wenigstens eine Einfrierschutzeinrichtung vorgesehen ist, die durch ein Einfrieren des Arbeitsmediums bedingte Schäden im Abwärmekreislauf verhindert. Erfindungsgemäß ist vorgesehen, dass die Einfrierschutzeinrichtung wenigstens ein Heizmittel aufweist, mit dem das Arbeitsmedium temperierbar ist. Die erfindungsgemäß eingesetzten Heizmittel werden hierbei bevorzugt auf zwei unterschiedliche Weisen eingesetzt. Einerseits ist es denkbar, mit einem geeigneten Heizmittel das Arbeitsmedium warm zu halten, andererseits sind derartige Heizmittel zum Ausheizen des Mediums aus Leitungen oder Komponenten des als sekundärer Wärmekreislauf ausgeführten Abwärmenutzungskreislaufs einsetzbar.

Durch das Vorsehen einer separaten Einfrierschutzeinrichtung innerhalb des Abwärmekreislaufs wird entweder sichergestellt, dass ein Einfrieren des Arbeitsmediums auch bei tiefen Außentemperaturen zuverlässig verhindert wird, oder dass die Komponenten trotz zulassen des Einfrierend des Arbeitsmedium aufgrund ihrer erfindungsgemäßen Ausführung nicht beschädigt werden. Somit sind die üblicherweise verwendeten Komponenten des als sekundärer Wärmekreislauf ausgeführten Abwärmekreislaufs ohne erhebliche konstruktive Änderungen oder den Einsatz spezieller Werkstoffe einsetzbar. Die erfindungsgemäße Einfrierschutzeinrichtung kann hierbei sowohl permanent aktiviert sein oder wenigstens zeitweise zugeschaltet werden, beispielsweise in Abhängigkeit vorgebbarer Betriebsparameter der Brennkraftmaschine und / oder der Umgebungstemperatur. Unter Abwärme- oder Abwärmenutzungskreislauf wird gemäß der Erfindung und der nachfolgenden Beschreibung ein sekundärer Wärmekreislauf verstanden, in den Abwärme aus einem Kühlkreislauf einer Brennkraftmaschine, die ansonsten an die Umgebungsluft abgegeben würde, eingekoppelt wird. Der Abwärme- oder Abwärmenutzungskreislauf stellt hierbei einen geschlossenen Kreislauf bzw. Kreisprozess dar, in dem ein Arbeitsmedium, das innerhalb des Kreislaufs seinen Aggregatzustand ändert, umgewälzt wird. Als Abwärme der Brennkraftmaschine wird im Sinne der Erfindung und der nachfolgenden Beschreibung sowohl die direkt im Bereich der Brennkraftmaschine abgeführte Abwärme als auch die Abwärme verstanden, die dem Abgas der Brennkraftmaschine entnommen wird. Dies ist darauf zurück zu führen, dass sowohl die Abwärme, die direkt aus der Brennkraftmaschine abgeführt wird als auch die Abwärme, die dem Abgas entnommen wird, aus der in der Brennkraftmaschine stattfindenden Verbrennung resultiert.

In einer speziellen Ausführungsform der Erfindung ist die Einfrierschutzeinrichtung als zumindest ein Zusatzstoff ausgeführt, der nach Zugabe zum Arbeitsmedium, einen Gefrierpunkt des Arbeitsmediums, also die Temperatur, bei der das Arbeitsmedium von einem flüssigen in einen festen Aggregatzustand übergeht, verringert. Der verwendete Zusatzstoff, beispielsweise ein Alkohol, wie Ethanol oder Propanol, zeichnet sich vorzugsweise durch seine Mischbarkeit mit Wasser und einen wesentlich geringeren Gefrierpunkt als Wasser aus. Die Mischung aus Arbeitsmedium und Zusatzstoff liegt im Arbeitsmediumtank vorzugsweise in flüssiger Form vor und wird von dort aus auf bevorzugte Weise mit Hilfe einer Speisewasserpumpe zunächst dem Verdampfer zugeführt bevor es durch die weiteren Komponenten des Abwärmenutzungskreislaufes geleitet wird.

Da die Menge des vom Speisetank zu den Verdampfern gelangende Arbeitsmediums geregelt wird, um den Massenstrom den Anforderungen des Gesamtsystems anzupassen, wird auch stets ein Mediummassenstrom mit einem definierten Mischverhältnis zwischen Arbeitsmedium und Zusatzstoff zu den einzelnen Komponenten, insbesondere dem Verdampfer sowie dem Kondensator, zugeführt. Durch eine vorteilhafte Regelung des Mediummassenstroms anhand der Verdampferaustrittstemperatur wird sichergestellt, dass das in den Verdampfer eintretende Medium mit einer Temperatur aus dem Verdampfer austritt, die über den Siedepunkten der Bestandteile des Arbeitsmediums liegt. Trotz der im Verdampfer lokal unterschiedlichen Verdampfungsbereiche sind somit am Austritt des Verdampfers alle Bestandteile des Gemischs in einem dampfförmigen Zustand vorhanden. Hierdurch wird vor allem sichergestellt, dass es nicht zu einer Entmischung des Arbeitsmediums und des Zusatzstoffes aufgrund der unterschiedlichen Siedepunkte dieser Stoffe kommt.

Eine besondere Weiterbildung der Erfindung sieht daher vor, dass die Verdampferaustrittstemperatur auf ein vergleichsweise hohes Niveau, insbesondere 300°C, ganz besonders geeignet sind mehr als 350°C, über den Siedetemperaturen beider Komponenten, also jeweils des Arbeitsmediums sowie des Zusatzstoffes, eingestellt werden. Beim Kondensieren wird wiederum sichergestellt, dass die Siedetemperatur beider Bestandteile jeweils unterschritten wird, so dass diese wieder in die flüssige Phase übergeführt werden und sich das Zusatzmittel in dem bevorzugt als Arbeitsmedium verwendeten Wasser löst. Durch die jeweils vollständige Überführung des Arbeitsmediums in den dampfförmigen bzw. in den flüssigen Zustand bleibt das Mischverhältnis auch über die Phasenübergänge in gesamten Kreislauf gleich.

Besonders geeignete Zusatzstoffe, die als Einfrierschutzeinrichtung für einen Abwärmekreislauf einer Brennkraftmaschine mit einem dort umwälzenden Arbeitsmedium eingesetzt werden können, sind Methanol, Ethanol, Propanol, Butanol oder Pentanol, sowie daraus abgeleitete oder erweiterte Verbindungen. In diesem Zusammenhang ist es ebenfalls denkbar, geeignete Mischungen dieser Alkohole zu verwenden.

Bei den vorgenannten Alkoholen handelt es sich um einfache Basisalkohole, wobei durch Veränderung der Molekülketten einzelne Eigenschaften der Alkohole auf bevorzugte Weise gezielt verändert werden können.

Eine weitere besondere Weiterbildung der Erfindung sieht vor, dass als Einfrierschutzeinrichtung spezielle Erweiterungsvolumina innerhalb des als sekundärer Wärmekreislauf ausgeführten Abwärmenutzungskreislaufes vorgesehen sind. Derartige Erweiterungs- und/oder Ausdehnvolumina werden entweder als zusätzliche Behälter ausgeführt oder durch flexible Dehnmittel, die bei einem Druckaufbau, beispielsweise durch sich bildendes Eis, nachgeben und die zumindest an einem Bauteil des sekundären Wärmekreislaufes vorgesehen sind, bereitgestellt.

Die zuvor beschriebenen, als Erweiterungs- und/oder Ausdehnvolumina ausgeführten Einfrierschutzeinrichtungen werden bevorzugt im Niederdruckbereich von Abwärmenutzungssystemen eingesetzt. Spezielle Ausdehnvolumina sind auf vorteilhafte Weise im Bereich eines Tanks, eines Filters oder einer Kondensatabsaugpumpe vorgesehen. Vorzugsweise weisen die Erweiterungs- und/oder Ausdehnvolumina zumindest abschnittsweise einen Kunststoff auf, der aufgrund seiner Flexibilität die Volumenausdehnung beim Einfrieren des Arbeitsmediums ohne Beschädigung mit ausführt. Alternativ oder in Ergänzung hierzu ist es grundsätzlich denkbar, dass Leitungen im Niederdruckbereich als flexible Kunststoffleitungen, insbesondere als Polyamidleitungen, ausgeführt werden.

Um im Hochdruckbereich eines die Abwärme einer Brennkraftmaschine nutzenden sekundären Wärmekreislaufes zusätzliche Ausdehnungsvolumina zu schaffen, ist es denkbar, Leitungen als faser-, gewirk- und/oder gewebeverstärkte Hochdruck-Heißwasserschläuche auszuführen, deren Fasern, Gewirk und/oder Gewebe im Gegensatz zu massiven Edelstahlleitungen gewisse Ausdehnungen ohne Beschädigung überstehen. Einen weiteren Vorteil bieten derartige Hochdruckschläuche, da sie wesentlich flexibler und einfacher zu verlegen sind als massive Edelstahlleitungen.

In einer weiteren besonders vorteilhaften Ausbildung der Erfindung ist an einem Verdampfer und/oder an einem Kondensator ein Ausdehn- oder Erweiterungsvolumen vorgesehen, das beim Betrieb der Brennkraftmaschine und des Abwärmekreislaufes nicht vollständig mit Arbeitsmedium gefüllt ist. Auf diese Weise wird bei einem möglichen Einfrieren des Arbeitsmediums das zusätzliche Volumen des Arbeitsmediums aufgenommen oder das Ausdehn- bzw. Erweiterungsvolumen wird nur in einer Form gedehnt, dass keine bleibenden Schäden am Verdampfer und/oder Kondensator entstehen. Ebenso ist es auch in diesem Fall denkbar, das Ausdehn- oder Erweiterungsvolumen derart auszuführen, dass es sich in geeigneter Weise flexibel verformt. Alternativ oder in Ergänzung hierzu kann ein Ausgleichsvolumen auch im Bereich des Speisetanks, etwa aufgrund nicht vollständiger Befüllung des Behälters mit Arbeitsmedium und/oder durch Verwendung eines flexiblen Materials für den Behälter. Geschaffen werden. Vorzugsweise wird durch den Speisetanks selbst ein Ausgleichsvolumen bereitgestellt.

In einer speziellen Ausführung der Erfindung sind der Speistank und der Ausgleichsbehälter des Fahrzeugkühlsystems, also wenigstens eines primären Kreislaufs zum Abführen der im Bereich der Brennkraftmaschine und/oder der Abgasabführung, anfallenden Abwärme, hydraulisch voneinander getrennt in einem Bauteil kombiniert. Durch diese Maßnahme wird auf vorteilhafte Weise sichergestellt, dass bis zur Inbetriebnahme des sekundären Abwärmekreislaufs nach Erreichen der Motorbetriebstemperatur im Speistank gefrorenes Medium zumindest teilweise durch die Wärme des Motorkühlwassers wieder in den flüssigen Aggregatszustand übergeführt wird.

Bei Systemen zum Warmhalten des Mediums werden bevorzugt elektrische Heizeinrichtungen innerhalb des Abwärmekreislaufes eingesetzt. Die Heizmittel können hierbei in den Leitungen und / oder den einzelnen Komponenten, wie etwa Verdampfer, Kondensator oder Pumpen, angeordnet werden. Mit Hilfe der Heizmittel wird die Temperatur des Arbeitsmediums oder eines Gemischs aus Arbeitsmedium und wenigstens einem weiteren Stoff stets über dessen Gefrierpunkt gehalten.

Ergänzend oder alternativ zu den Heizmitteln für das Warmhalten des Mediums können Heizmittel dazu verwendet werden, dass das Arbeitsmedium aus Leitungen und / oder Komponenten des Abwärmekreislaufs ausgeheizt wird. Beim Ausheizen des Arbeitsmediums wird das in einer Leitung und/oder Komponente des sekundären Wärmekreislaufs verbleibende Arbeitsmedium derart erhitzt, dass es weitgehend verdampft. Nach Beendigung des Ausheizvorgangs kondensiert das Medium in der entsprechenden Leitung und/oder Komponente des Abwärmekreislaufes erneut, so dass sich das Volumen des in der Leitung und/oder der Komponente verbliebenen Mediums durch das Kondensieren erheblich verringert. Insbesondere bilden sich lediglich einige Kondensattropfen in der Leitung und/oder der Komponente, beispielsweise in den Kanälen des Verdampfers und / oder des Kondensators, so dass es bei einem Einfrieren dieser Resttropfen des Arbeitsmediums nicht zu einer Schädigung der ausgeheizten Leitung und/oder Komponente kommt.

In einer besonderen Ausführungsform der Erfindung werden die Heizmittel zum Ausheizen des Arbeitsmediums derart geregelt, dass bei einem Betriebsstopp der Brennkraftmaschine, bei der Einleitung einer Betriebsruhe der Brennkraftmaschine oder sobald sich die Brennkraftmaschine bei oder unterhalb eines vorgebbaren Lastpunktes, insbesondere bei Leerlaufdrehzahl, befindet, der Ausheizvorgang gestartet wird.

Als Heizmittel kommen unterschiedliche Bauteile in Frage. Einerseits können die ohnehin im Abwärmekreislauf vorgesehenen Komponenten als Heizmittel zum Ausheizen bestimmter Leitungen und/oder Komponenten genutzt werden, andererseits können zusätzliche Heizmittel, insbesondere elektrische Heizmittel, im Abwärmekreislauf vorgesehen werden.
In einer ersten erfindungsgemäßen Variante für den Ausheizvorgang wird gemäß Anspruch 1 die Restwärme eines Verdampfers des Abwärmekreislaufes genutzt. Hierfür wird zunächst die Zufuhr des Arbeitsmediums durch die Speisepumpe in den Abwärmekreislauf gestoppt. Durch diese Maßnahme wird der Druck im Abwärmesystem verringert und aufgrund der Restwärme des Verdampfers verdampft das im Verdampfer befindliche Arbeitsmedium. Sobald der sich durch Aufheizung mittels Restwärme bildende Dampf beim Abkühlen der einzelnen Komponenten des Abwärmekreislaufes wieder kondensiert, verbleiben lediglich vernachlässigbar wenige Kondensattropfen in den Kanälen des Verdampfers. In diesem Zusammenhang wird der Ausheizvorgang derart durchgeführt, dass nach dessen Beendigung lediglich eine so kleine Restmenge des Arbeitsmediums in den ausgeheizten Leitungen und/oder Komponenten verbleibt, dass ein Einfrieren der entsprechenden Tropfen des Restarbeitsmediums nicht zu einer Schädigung des Abwärmekreislaufes führt.

Um sicher zu stellen, dass stets ausreichend Restwärme für die Verdampfung des im Abwärmekreislauf verbleibenden Arbeitsmediums vorhanden ist, sieht eine Weiterbildung des zuvor geschilderten Verfahrensablaufs vor, dass beim Start des aus Brennkraftmaschine und Abwärmenutzungskreislauf bestehenden Gesamtsystems erst Arbeitsmedium über die Speisepumpe in den Abwärmekreislauf gepumpt wird, sobald die einzelnen Leitungen und/oder Komponenten, insbesondere der Verdampfer, durch das heiße, die Brennkraftmaschine verlassene Abgas auf die benötigte Temperatur aufgeheizt wurden. Unter benötigter Temperatur ist hierbei eine Temperatur oberhalb des Siedepunktes des Arbeitsmediums zu verstehen.

Eine weitere spezielle Ausführungsform der Erfindung sieht vor, dass die Einfrierschutzeinrichtung Mittel zum Ausblasen, Aussaugen und / oder zur Selbstentleerung wenigstens einer Komponente des Abwärmekreislaufes aufweist. Derartige Systeme werden bevorzugt im Bereich von massiven Bauteilen eines Abwärmekreislaufes angeordnet, die nicht in geeigneter Weise ausheizbar sind. Dass einzelne Komponenten des Abwärmekreislaufes nicht in ausreichendem Maße ausheizbar sind, ist oftmals darauf zurückzuführen, dass diese nicht über eine ausreichende Restwärme verfügen und/oder nicht beständig gegen entsprechend hohe Temperaturen sind.

Beim erfindungsgemäßen Ausblasen gemäß Anspruch 2 wird an einer geeigneten Stelle des Abwärmekreislaufes kurzzeitig Luft in das System eingeblasen, die das Medium aus dem Verdampfer hinausbläst. Das Ausblasen muss hierbei nicht zwangsläufig derart durchgeführt werden, dass das Medium vollständig aus der entsprechenden Komponente entfernt wird. Vielmehr ist es in einer bevorzugten Weiterbildung vorgesehen, dass das Ausblasen nur solange oder so intensiv geschieht, bis eine definierbare Restmenge des Arbeitsmediums noch in der entsprechenden Leitung und/oder Komponenten verbliebt. Das Ausblasen erfolgt somit vorzugsweise derart, dass nur noch eine Resttropfenmenge in der wenigstens einen für das Ausblasen vorgesehenen Leitung und/oder Komponente verbleibt, deren Einfrieren das Abwärmesystem nicht in unzulässiger Weise schädigt.

In einer weiteren speziellen Weiterbildung der Erfindung wird mit Hilfe von Aussaugmitteln aus wenigstens einer Komponente des Abwärmekreislaufes das Arbeitsmedium ausgesaugt. Vorteilhaferweise wird das abgesaugte Arbeitsmedium in einen Ausgleichsbehälter und / oder den Speisetank zurückgefördert. Bevorzugt erfolgt das Aussaugen in Bereichen des Abwärmekreislaufes, die besonders gefährdet gegenüber dem Einfrieren des Arbeitsmediums sind. Zum Aussaugen wird beispielsweise mit einer elektrisch betriebenen Pumpe das Arbeitsmedium aus wenigstens einer Leitung und/oder Komponente des Abwärmekreislaufes abgesaugt. Hierbei wird innerhalb der für das Absaugen vorgesehenen Leitung und/oder Komponente auf bevorzugte Weise ein Raum vorgesehen, in dem sich die in der Komponente verbleibende Flüssigkeit sammeln und von der Pumpe abgesaugt werden kann. Durch diese Maßnahme kann die für die Absaugung vorgesehene Komponente des Abwärmekreislaufs flüssigkeitsfrei gemacht werden oder wiederum zumindest sichergestellt werden, dass das darin verbleibende Arbeitsmedium nur noch in einer Menge bzw. in einer Resttropfenanzahl vorliegt, deren Einfrieren nicht zu einer Schädigung des Abwärmenutzungssystems führt.

Eine weitere besonders geeignete Ausführungsform in Bezug auf die Entleerung wenigstens einer Komponente des Abwärmekreislaufes stellt die Selbstentleerung dar. Mittel zur Selbstentleerung werden auf bevorzugte Weise in Ergänzung zu Ausblas- und / oder Aussaugmitteln vorgesehen. Dies ist vor allem darauf zurückzuführen, dass mittels Selbstentleerungsmitteln Arbeitsmedium nur dann aus wenigstens einer Leitung und/oder Komponente des Abwärmekreislaufes entfernt werden kann, wenn dies aufgrund der Schwerkraft möglich ist. Dies ist vorzugsweise dann der Fall, wenn das Arbeitsmedium bei Betätigung des Selbstentleerungsstellmittels schwerkraftbedingt aus der wenigstens einen Komponente bis zur nächsten Absaug- oder Ausheizstelle oder einem Ausgleichs- bzw. dem Speisemediumbehälter fließen kann. Um die Selbstentleerungsmittel auf bevorzugte Weise nutzen zu können, sind die entsprechenden Komponenten des Abwärmekreislaufes höher anzuordnen als die Punkte, zu denen das Arbeitsmedium schwerkraftbedingt fließen soll.

Im Folgenden wird die Erfindung anhand von Figuren ohne Beschränkung des allgemeinen Erfindungsgedankens näher erläutert. Es zeigen:
- Fig. 1:: Abwärmenutzungskreislauf einer Brennkraftmaschine;
- Fig. 2:: Als Heizmittel ausgeführte Einfrierschutzeinrichtung zum Warmhalten und / oder Ausheizen für ein Abwärmenutzungskreislauf;
- Fig. 3:: Kondensator eines Abwärmenutzungskreislaufs mit Mitteln zum Aussaugen des Arbeitsmediums;
- Fig. 4:: Verdampfer eines Abwärmenutzungskreislaufs mit Mitteln zum Ausblasen des Arbeitsmediums sowie
- Fig. 5:: Mittel zur Selbstentleerung einer Komponente eines Abwärme-nutzungskreislaufs.

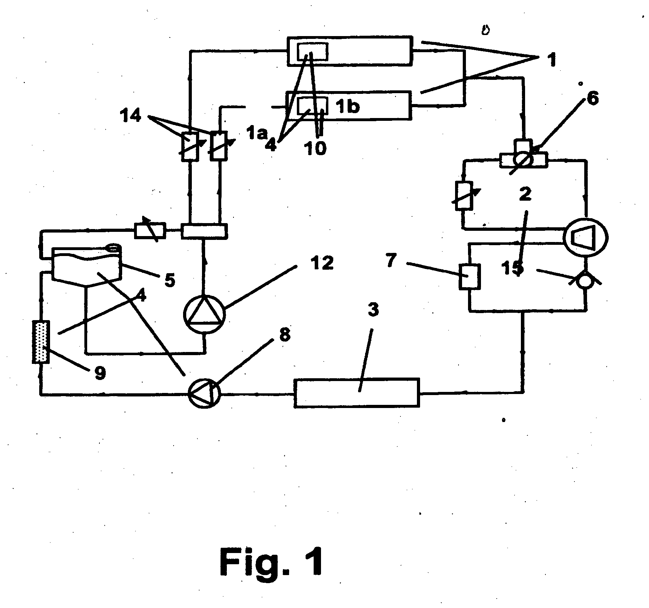

Figur 1 zeigt einen Abwärmenutzungskreislauf, mit dem die Abwärme einer Brennkraftmaschine in mechanische Arbeit umgewandelt wird. Hierfür wird die in der Brennkraftmaschine oder im Abgassystem anfallende Abwärme zunächst an einen primären Kühlkreislauf übertragen bevor es dem als sekundären Wärmekreislauf ausgeführten Abwärmekreislauf zur Verfügung gestellt wird. Die wesentlichen für die Abwärmenutzung benötigten Komponenten sind ein Verdampfer 1, in dem ein Arbeitsmedium aus der flüssigen in die dampförmige Phase überführt wird, eine Expandereinheit 2, in der das dampfförmige Arbeitsmedium entspannt und hierdurch mechanische Arbeit abgegeben wird, und ein Kondensator, in dem das Arbeitsmedium wieder in den Ausgangszustand vor der Verdampfung verflüssigt wird.

Im Folgenden wird näher auf die konkrete in Figur 1 dargestellte Anlagenkonfiguration eingegangen. Aus einem Speisetank 5 wird mit Hilfe der Speisepumpe 12 ein Arbeitsmedium in den Abwärmenutzungskreislauf gefördert. Die Menge des jeweils in den Kreislauf geförderten und die einzelnen Komponenten, insbesondere die Verdampfer 1a, 1b und die Expandereinheit 2 durchströmenden Arbeitsmediums wird in Abhängigkeit der Betriebsparameter der Brennkraftmaschine, insbesondere der abzuführenden Abwärme geregelt. In den parallel verschalteten Verdampfern 1a und 1b wird die Abwärme der Brennkraftmaschine genutzt, indem im Verdampfer 1a die Abwärme einer Abgasrückführung und im Verdampfer 1b die an einer anderen Stelle des Abgasstrangs bereit gestellte Abwärme für die Verdampfung des Arbeitsmediums verwendet wird. Als Arbeitsmedium wird entionisiertes Wasser verwendet, das insbesondere aufgrund seiner thermodynamischen Eigenschaften, der einfachen Handhabung und der geringen Kosten Vorteile gegenüber anderen Arbeitsmedien bietet.

In den Verdampfern 1a und 1b findet eine Verdampfung des Arbeitsmediums und, sofern als Gefrierschutzmittel ein Alkohol zugesetzt ist, des Zusatzstoffs statt. Der Dampf wird über ein Dreiwegeventil 6 zur Expandereinheit geleitet. In der Expandereinheit 2 wird der Dampf zumindest teilweise entspannt und das entspannte Arbeitsmedium an Leitungen des Abwärmenutzungskreislaufes abgegeben. Das Drosselventil 7 dient, parallel zur Expandereinheit 2 geschaltet, einerseits dem Anfahren und Abschalten des Systems und andererseits dem Abführen von einem nicht für die Entspannung vorgesehenem Anteil des dampfförmigen Arbeitsmediums aufgrund entsprechender Leistungsanforderungen.

Das gesamte entspannte Arbeitsmedium wird nunmehr zu einem Kondensator 3 gefördert, in dem das Arbeitsmedium unter Wärmeabgabe wieder in den ursprünglichen Zustand verflüssigt und daraufhin mittels einer Kondensatabsaugpumpe 8 über einen Filter 9 in den Speisetank gefördert wird.

Aufgrund der dort herrschenden Zustandsparameter des Arbeitsmediums lässt sich der Abwärmenutzungskreislauf grob in drei Bereiche, nämliche einen Niederdruck-, einen Hochdruckflüssig- und einen Hochdruckdampfbereich, aufteilen. Diese drei Bereiche bzw. die in den jeweiligen Bereichen angeordneten Komponenten und Leitungen sind in unterschiedlichem Maße durch ein Einfrieren des Arbeitsmediums gefährdet.

Da bei einer Abkühlung des Hochdruckdampfbereich der Dampf zunächst entspannt wird und schließlich kondensiert, so dass bei einer Außerbetriebnahme des Abwärmenutzungssystems Arbeitsmedium nur noch in Tropfenform vorliegt, ist dieser Bereich nicht durch ein mögliches Einfrieren des Arbeitsmediums gefährdet. In diesem Bereich befinden sich das Dreiwegeventil 7, die Expandereinheit 2 und das Drosselventil 7. Unter Umständen ist hinter der Expandereinheit 2 noch ein Rückschlagventil vorgesehen. Die Verbindungsleitungen in diesem Bereich sind als Edelstahlrohrleitungen ausgeführt.

Der Kondensator 3, die Kondensatabsaugpumpe 8, der Filter 9 sowie der Speisetank 5 befinden sich im Niederdruckbereich. Ohne das Vorsehen von geeigneten Schutzmaßnahmen kann es in diesem Bereich beim Einfrieren des Arbeitsmediums zu erheblichen Schäden an den Leitungen und/oder den Anlagenkomponenten kommen. Aus diesem Grund sind hier mehrere Einfrierschutzmittel vorgesehen. Zunächst kann bei Bedarf dem Arbeitsmedium eine geringe Menge Propanol beigefügt werden. Darüber hinaus sind die Verbindungsleitungen zwischen dem Ausgang des Kondensators 3 und des Eingangs der Speisepumpe als Polyamidleitungen ausgeführt, die sich durch eine gewisse Flexibilität auszeichnen. Ferner sind zumindest der Filter 9, in geeigneter Weise die Kondensatabsaugpumpe 8 und der Filter 9 oberhalb des Speisetanks 5 angeordnet, so dass bei diesen Komponenten bei Außerbetriebnahme der Abwärmenutzungsanlage eine Selbstentleerung des Arbeitsmedium in den Speisetank 5 erfolgt. Weiterhin ist vorgesehen, dass das nach Außerbetriebnahme im Kondensator 3 verbleibende Arbeitsmedium zumindest weitgehend durch die Kondensatabsaugpumpe 8 abgesaugt und in den Speisetank 5 gefördert wird. Auf diese Weise verbleibt im Kondensator 3 maximal eine Restmenge des Arbeitsmediums, die in Tropfenform vorliegt und den Kondensator 3 bei einem Einfrieren nicht gefährdet.

Der Speistank 5 und ein zumindest einen Teil der Einfierschutzeinrichtung 4 bildende Ausgleichsbehälter des Fahrzeugkühlsystems sind hydraulisch voneinander getrennt in einem Bauteil kombiniert. Dadurch wird sichergestellt, dass nach Erreichen der Motorbetriebstemperatur bis zur Inbetriebnahme des sekundären Abwärmekreislaufs das im Speistank gefrorene Medium zumindest teilweise durch die Wärme des Motorkühlwassers wieder in den flüssigen Aggregatszustand übergeführt worden ist.

Die Speisepumpe 12 sowie die strömungstechnisch parallel angeordneten Verdampfer 1a und 1b befinden sich in einem Hochdruckflüssigbereich, der bei einem Einfrieren des Arbeitsmediums besonders stark in Bezug auf Beschädigungen gefährdet ist.

Die in diesem Bereich vorgesehenen Verbindungsleitungen sind als Hochdruckschläuche ausgeführt. Hierbei handelt es sich um flexible Schläuche aus einem Gummi oder Kunststoff enthaltenden Grundmaterial, in das ein Gewebe eingebettet ist. Diese Schläuche bieten einerseits den Vorteil, dass sie flexibel und somit gut zu montieren sind und dass sie andererseits auch hohen Drücken, die aufgrund des Einfrierens des Arbeitsmediums auftreten können, widerstehen.

Weiterhin sind in den Verdampfern 1a und 1b Heizmittel vorgesehen, die das Arbeitsmedium im Bedarfsfall auf eine Temperatur erwärmen, die oberhalb des Gefrierpunktes des Mediums liegt. Darüber wird bei der in Figur 1 dargestellten Ausführungsform die Speisepumpe 12 bzw. die Stromregelventile 13 erst in Betrieb genommen und somit Arbeitsmedium in den Abwärmenutzungskreislauf einschließlich der Verdampfer 1a und 1b gefördert, wenn die Verdampfer auf eine Temperatur aufgewärmt sind, die bei einer Außerbetriebnahme sicher stellt, dass das in den Verdampfern 1a, 1b verbliebene Arbeitsmedium verdampft, so dass schließlich nur eine Restmenge des Arbeitsmedium in Tropfenform in den Verdampfern 1a, 1b verbleibt. Sollte diese Restmenge des Arbeitsmediums einfrieren, sind die Verdampfer 1a, 1b hierdurch nicht durch entsprechende Schäden gefährdet.

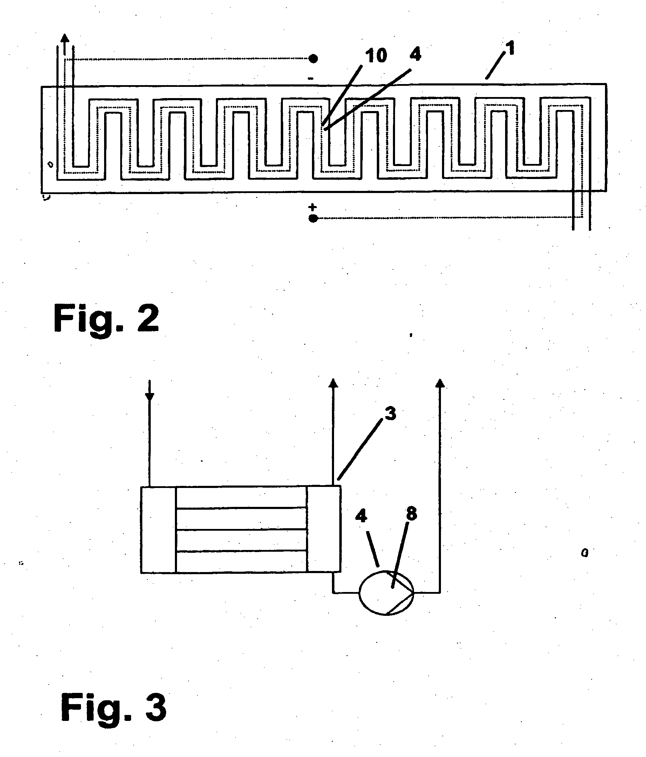

Ergänzend zu der im Zusammenhang mit Figur 1 erläuterten Ausführungsform sind in den Figuren 2 bis 5 spezielle Einfrierschutzmittel dargestellt, die jeweils ergänzend oder alternativ in eine Anlagenkonfiguration gemäß Figur 1 integriert werden können.

In Figur 2 ist ein Verdampfer 1 dargestellt, wie er sowohl als die Abwärme einer Abgasrückführung nutzender Verdampfer 1a oder aber als Verdampfer 1b, der die an anderer Stelle des Abgasstrangs anfallende Abwärme nutzt, eingesetzt werden kann. In dem Verdampfer 1 ist ein elektrisch betriebenes Heizmittel 10, vorzugsweise in Form wenigstens eines Heizdrahts, vorgesehen, mit dem die Kanäle des Verdampfers 1 im Bedarfsfall auf eine Temperatur aufgeheizt werden, die oberhalb des Gefrierpunktes des Arbeitsmediums liegt. Bei Außerbetriebnahme der Brennkraftmaschine und/oder des Abwärmenutzungskreislaufs wird das Arbeitsmedium mit Hilfe des Heizmittels 10 ferner auf eine Temperatur aufgeheizt, die über dem Siedepunkt des Arbeitsmediums liegt, so dass dieses verdampf und nach Abkühlung des Verdampfers schließlich nur noch eine Restmenge in Tropfenform im Verdampfer 1 verbleibt. Sollten diese Tropfen einfrieren, sind keine Schäden am Verdampfer 1 zu befürchten.

Figur 3 zeigt einen Kondensator 3, dem eine Kondensatabsaugpumpe 8 nachgeschaltet ist. Bei einer Außerbetriebnahme des Abwärmenutzungskreislaufs wird mit Hilfe der Kondensatabsaugpumpe 8 Arbeitsmedium entweder vollständig oder zumindest derart, dass die im Kondensator 3 verbleibende Restmenge des Arbeitsmediums beim Einfrieren keine Schäden am Kondensator 3 hervorruft, abgesaugt.

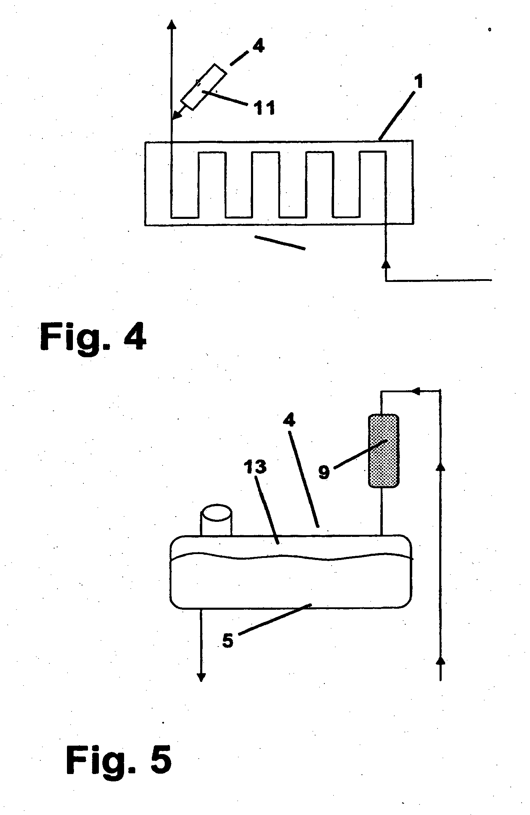

In Figur 4 ist ein massiv ausgeführter Verdampfer 1 dargestellt, der aufgrund seiner Bauform nicht für den Einsatz einer Ausheizung des Arbeitsmediums als Einfrierschutzeinrichtung eignet. In diesem Fall ist als Einfrierschutzeinrichtung ein Mittel zum Ausblasen der Arbeitsmediums 11 aus dem Verdampfer 1 vorgesehen. Bei Außerbetriebnahme der Brennkraftmaschine und/oder des Abwärmenutzungskreislaufs wird mittels einer Lufteinblasdüse 11 zumindest so viel Arbeitsmedium aus dem Verdampfer ausgeblasen, dass es bei einem Einfrieren des unter Umständen zurück bleibenden Arbeitsmediums nicht zu Schäden am Verdampfer 1 kommt. Das Arbeitsmedium wird derart aus dem Verdampfer 1 ausgeblasen, dass es zurück in die Zuführleitungen, oder weiter in die Ableitungen und zumindest teilweise in den Speisetank 5 fließt.

Figur 5 zeigt schließlich die Verwendung von Mitteln zur Selbstentleerung als Einfrierschutzeinrichtung 4. Hierbei ist ein Ausgleichstank 13 als Erweiterungsvolumen vorgesehen, der nicht vollständig mit Arbeitsmedium gefüllt ist. Alternativ oder ergänzend kann auch der Speisetank 5 gleichzeitig die Funktion eines Erweiterungsvolumens übernehmen.

In dem dargestellten Fall ist der Filter 9 oberhalb des Ausgleichstanks angeordnet, so dass bei einer Außerbetriebnahme des Abwärmenutzungskreislaufs das im Filter befindliche Arbeitsmedium schwerkraftbedingt in den Ausgleichstank fließt. Sollte dies nicht ohnehin aufgrund des Strömungswiderstands der Fall sein, kann auf der dem Ausgleichstank 13 gegenüberliegenden Seite des Filters 9 ein Rückschlagventil vorgesehen sein, dass ein Rückfließen des Arbeitsmediums in den Abwärmenutzungskreislauf zuverlässig verhindert.

### Bezugszeichenliste

- 1: Verdampfer
- 2: Expandereinheit
- 3: Kondensator
- 4: Einfrierschutzeinrichtung
- 5: Speisetank
- 6: Dreiwegeventil
- 7: Drosselventil
- 8: Kondensatabsaugpumpe
- 9: Filter
- 10: Heizmittel
- 11: Ausblasmittel
- 12: Speisepumpe
- 13: Ausgleichstank
- 14: Stromregelventile
- 15: Rückschlagventil

## Patentansprüche

1. Vorrichtung zur Abwärmenutzung einer Brennkraftmaschine mit einem Abwärmekreislauf, in dem ein Arbeitsmedium umwälzt und durch den Abwärme der Brennkraftmaschine und/oder Abgaswärme in mechanische Arbeit umgewandelt wird, wobei in dem Abwärmekreislauf ein Verdampfer (1), in dem das Arbeitsmedium durch Aufnahme von Abwärme der Brennkraftmaschine zumindest teilweise in einen dampfförmigen Aggregatzustand überführt wird, eine Expandereinheit (2) zur Bereitstellung der Antriebsenergie, in der das zumindest teilweise dampfförmige Arbeitsmedium entspannt wird, vorgesehen sind, und mit einem Kondensator (3), in dem das Arbeitsmedium in einen flüssigen Aggregatzustand überführt wird, wobei im Abwärmekreislauf wenigstens eine Einfrierschutzeinrichtung (4) vorgesehen ist, die durch ein Einfrieren des Arbeitsmediums bedingte Schäden im Abwärmekreislauf verhindert, wobei die Einfrierschutzeinrichtung (4) wenigstens ein Heizmittel (10) aufweist, mit dem das Arbeitsmedium temperierbar ist, **dadurch gekennzeichnet, dass** das Heizmittel (10) die nach Außerbetriebnahme des Abwärmekreislaufs im Verdampfer (2) vorhandene Restwärme nutzt dergestalt,
dass zunächst die Zufuhr des Arbeitsmediums durch eine Speisepumpe (12) in den Abwärmekreislauf gestoppt wird, wodurch der Druck im Abwärmekreislauf verringert wird und aufgrund der Restwärme des Verdampfers (2) das im Verdampfer (2) befindliche Arbeitsmedium verdampft.

2. Vorrichtung zur Abwärmenutzung einer Brennkraftmaschine mit einem Abwärmekreislauf, in dem ein Arbeitsmedium umwälzt und durch den Abwärme der Brennkraftmaschine und/oder Abgaswärme in mechanische Arbeit umgewandelt wird, wobei in dem Abwärmekreislauf ein Verdampfer (1), in dem das Arbeitsmedium durch Aufnahme von Abwärme der Brennkraftmaschine zumindest teilweise in einen dampfförmigen Aggregatzustand überführt wird, eine Expandereinheit (2) zur Bereitstellung der Antriebsenergie, in der das zumindest teilweise dampfförmige Arbeitsmedium entspannt wird, vorgesehen sind, und mit einem Kondensator (3), in dem das Arbeitsmedium in einen flüssigen Aggregatzustand überführt wird, wobei im Ab-wärmekreislauf wenigstens eine Einfrierschutzeinrichtung (4) vorgesehen ist, die durch ein Einfrieren des Arbeitsmediums bedingte Schäden im Abwärmekreislauf verhindert, wobei die Einfrierschutzeinrichtung (4) wenigstens ein Heizmittel (10) aufweist, mit dem das Arbeitsmedium temperierbar ist, wobei die Einfrierschutzeinrichtung (4) wenigstens ein Stellmittel aufweist, mit dem in Nichtbetriebsphasen der Brennkraftmaschine Arbeitsmedium zumindest teilweise aus wenigstens einem Bauteil des Abwärmekreislaufs ableitbar ist,
**dadurch gekennzeichnet,**
**dass** das Stellmittel als Ausblaseinrichtung ausgeführt ist und als Stellmittel eine Luftblaseinrichtung (11) vorgesehen ist, mit der Arbeitsmedium aus dem Verdampfer (1) ausblasbar ist.

3. Vorrichtung nach Anspruch 1 oder 2,
dass die Einfrierschutzeinrichtung (4) über zumindest einen Zusatzstoff verfügt, der bei Zugabe zum Arbeitsmedium, einen Gefrierpunkt, also eine Temperatur bei der das Arbeitsmedium von einem flüssigen in einen festen Aggregatzustand übergeht, verringert.

4. Vorrichtung nach Anspruch 2 oder nach Anspruch 2 und 3,
**dadurch gekennzeichnet, dass** das Heizmittel (10) die nach Außerbetriebnahme des Abwärmekreislaufs im Verdampfer (2) und/oder im Kondensator (3) vorhandene Restwärme nutzt.

5. Vorrichtung nach Anspruch 2 oder nach Anspruch 2 und 3,
**dadurch gekennzeichnet, dass** das Heizmittel (10) als elektrisch betriebenes Heizmittel ausgeführt ist.

6. Vorrichtung nach einem der Ansprüche 1 bis 5,
**dadurch gekennzeichnet, dass** als Einfrierschutzeinrichtung (4) weiter ein Ausgleichsvolumen vorgesehen ist.

7. Vorrichtung nach Anspruch 6,
**dadurch gekennzeichnet, dass** ein Speisetank (5) als Ausgleichvolumen ausgeführt ist.

8. Vorrichtung nach Anspruch 7,
**dadurch gekennzeichnet, dass** der Speisetank (5) und ein Kühlmittelausgleichsbehälter eines Fahrzeugkühlsystems hydraulisch voneinander getrennt als eine Komponente ausgeführt sind.

9. Vorrichtung nach einem der Ansprüche 1 bis 8,
**dadurch gekennzeichnet, dass** als Einfrierschutzeinrichtung (4) weiter zumindest eine flexible Verbindungsleitung vorgesehen ist.

10. Vorrichtung nach einem der Ansprüche 1 bis 9,
**dadurch gekennzeichnet, dass** als Einfrierschutzeinrichtung weiter wenigstens eine Verbindungsleitung in einem Bereich zwischen dem Kondensator (3) und einer Speisepumpe (12) als Kunststoffleitung, insbesondere als Polyamidleitung ausgeführt ist.

11. Vorrichtung nach einem der Ansprüche 1 bis 10,
**dadurch gekennzeichnet, dass** als Einfrierschutzeinrichtung weiter wenigstens eine Verbindungsleitung in einem Bereich zwischen einer Speisepumpe (12) und dem Verdampfer (1) als Gummi- oder Kunststoffleitung mit einer Gewebe- oder Drahtarmierung ausgeführt ist.

12. Verwendung einer Vorrichtung nach einem der vorangehenden Ansprüche in einem Kraftfahrzeug, insbesondere in einem Nutzfahrzeug, mit einer Brennkraftmaschine und einem Abwärmenutzungssystem, das die im Bereich der Brennkraftmaschine anfallende und/oder im Abgas enthaltene Wärme zumindest teilweise in mechanische Arbeit umwandelt.

## Claims

1. Apparatus for utilizing the waste heat of an internal combustion engine having a waste-heat circuit, in which a working medium circulates and by which waste heat of the internal combustion engine and/or exhaust-gas heat are/is converted into mechanical work, an evaporator (1), in which the working medium is converted at least partially into a vaporous physical state by way of absorption of waste heat from the internal combustion engine, and an expansion unit (2) for providing the drive energy, in which expansion unit (2) the at least partially vaporous working medium is relieved, being provided in the waste-heat circuit, and having a condenser (3), in which the working medium is converted into a liquid physical state, at least one anti-freeze device (4) being provided in the waste-heat circuit, which anti-freeze device (4) prevents damage in the waste-heat circuit, which damage is caused by freezing of the working medium, the anti-freeze device (4) having at least one heating means (10), by way of which the temperature of the working medium can be controlled, **characterized in that** the heating means (10) utilizes the residual heat which is present after shutting down of the waste-heat circuit in the evaporator (2), in such a way that first of all the feed of the working medium into the waste-heat circuit by way of a feed pump (12) is stopped, as a result of which the pressure in the waste-heat circuit is reduced and the working medium which is situated in the evaporator (2) evaporates on account of the residual heat of the evaporator (2).

2. Apparatus for utilizing the waste heat of an internal combustion engine having a waste-heat circuit, in which a working medium circulates and by which waste heat of the internal combustion engine and/or exhaust-gas heat are/is converted into mechanical work, an evaporator (1), in which the working medium is converted at least partially into a vaporous physical state by way of absorption of waste heat from the internal combustion engine, and an expansion unit (2) for providing the drive energy, in which expansion unit (2) the at least partially vaporous working medium is relieved, being provided in the waste-heat circuit, and having a condenser (3), in which the working medium is converted into a liquid physical state, at least one anti-freeze device (4) being provided in the waste-heat circuit, which anti-freeze device (4) prevents damage in the waste-heat circuit, which damage is caused by freezing of the working medium, the anti-freeze device (4) having at least one heating means (10), by way of which the temperature of the working medium can be controlled, the anti-freeze device (4) having at least one actuating means, by way of which working medium can be discharged at least partially from at least one component of the waste-heat circuit in non-operational phases of the internal combustion engine,
**characterized**
**in that** the actuating means is configured as a purging device and an air-blowing device (11) is provided as actuating means, by way of which air-blowing device working medium can be purged from the evaporator (1).

3. Apparatus according to Claim 1 or 2, that the anti-freeze device (4) has at least one additive which, when added to the working medium reduces a freezing point, that is to say a temperature at which the working medium passes from a liquid into a solid physical state.

4. Apparatus according to Claim 2 or according to Claims 2 and 3, **characterized in that** the heating means (10) utilizes the residual heat which is present in the evaporator (2) and/or in the condenser (3) after shutdown of the waste-heat circuit.

5. Apparatus according to Claim 2 or according to Claims 2 and 3, **characterized in that** the heating means (10) is configured as an electrically operated heating means.

6. Apparatus according to one of Claims 1 to 5, **characterized in that** a compensation volume is furthermore provided as anti-freeze device (4).

7. Apparatus according to Claim 6, **characterized in that** a feed tank (5) is configured as compensation volume.

8. Apparatus according to Claim 7, **characterized in that** the feed tank (5) and a coolant compensation container of a vehicle cooling system are configured as one component such that they are separated hydraulically from one another.

9. Apparatus according to one of Claims 1 to 8, **characterized in that** at least one flexible connecting line is furthermore provided as anti-freeze device (4).

10. Apparatus according to one of Claims 1 to 9, **characterized in that**, as anti-freeze device, at least one connecting line is furthermore configured as a plastic line, in particular as a polyamide line, in a region between the condenser (3) and a feed pump (12).

11. Apparatus according to one of Claims 1 to 10, **characterized in that**, as anti-freeze device, at least one connecting line is furthermore configured as a rubber or plastic line with a woven-fabric or wire reinforcement in a region between a feed pump (12) and the evaporator (1).

12. Use of an apparatus according to one of the preceding claims in a motor vehicle, in particular in a commercial vehicle, having an internal combustion engine and a waste-heat utilization system which converts the heat which accumulates in the region of the internal combustion engine and/or is contained in the exhaust gas at least partially into mechanical work.

## Revendications

1. Dispositif d'utilisation de la chaleur perdue d'un moteur à combustion interne comprenant un circuit de chaleur perdue, dans lequel circule un fluide de travail qui convertit en travail mécanique la chaleur perdue du moteur à combustion interne et/ou la chaleur des gaz d'échappement, dans lequel sont disposés un évaporateur (1), dans lequel le fluide de travail est transféré au moins en partie à l'état de vapeur par l'absorption de la chaleur perdue du moteur à combustion interne, et une unité de détente (2) pour fournir l'énergie d'entraînement, dans laquelle le fluide de travail au moins en partie sous forme de vapeur est détendu, et ayant un condenseur (3), dans lequel le fluide de travail est transféré à l'état liquide, au moins un dispositif de protection antigel (4) étant prévu dans le circuit de chaleur perdue, lequel empêche qu'il ne se produise des endommagements dans le circuit de chaleur perdue, produits par le gel du fluide de travail, le dispositif de protection antigel (4) présentant au moins un moyen chauffant (10) avec lequel le fluide de travail peut être régulé en température, **caractérisé en ce que** le moyen chauffant (10) utilise la chaleur résiduelle présente après la mise hors service du circuit de chaleur perdue dans l'évaporateur (2) de telle sorte que l'alimentation en fluide de travail par une pompe d'alimentation (12) dans le circuit de chaleur perdue soit d'abord arrêtée, de sorte que la pression dans le circuit de chaleur perdue soit réduite et que sur la base de la chaleur perdue résiduelle de l'évaporateur (2), le fluide de travail se trouvant dans l'évaporateur (2) s'évapore.

2. Dispositif d'utilisation de la chaleur perdue d'un moteur à combustion interne comprenant un circuit de chaleur perdue, dans lequel circule un fluide de travail qui convertit en travail mécanique la chaleur perdue du moteur à combustion interne et/ou la chaleur des gaz d'échappement, dans lequel sont disposés un évaporateur (1), dans lequel le fluide de travail est transféré au moins en partie à l'état de vapeur par l'absorption de la chaleur perdue du moteur à combustion interne, et une unité de détente (2) pour fournir l'énergie d'entraînement, dans laquelle le fluide de travail au moins en partie sous forme de vapeur est détendu, et ayant un condenseur (3), dans lequel le fluide de travail est transféré à l'état liquide, au moins un dispositif de protection antigel (4) étant prévu dans le circuit de chaleur perdue, lequel empêche qu'il ne se produise des endommagements dans le circuit de chaleur perdue, produits par le gel du fluide de travail, le dispositif de protection antigel (4) présentant au moins un moyen chauffant (10) avec lequel le fluide de travail peut être régulé en température, le dispositif de protection antigel (4) présentant au moins un actionneur avec lequel du fluide de travail, dans des phases de non fonctionnement du moteur à combustion interne, peut être dévié au moins en partie hors d'au moins un composant du circuit de chaleur perdue,
**caractérisé en ce que** l'actionneur est réalisé sous forme de dispositif de soufflage et l'on prévoit en tant qu'actionneur un dispositif de soufflage d'air (11) avec lequel le fluide de travail peut être soufflé hors de l'évaporateur (1).

3. Dispositif selon la revendication 1 ou 2,
que le dispositif de protection antigel (4) dispose d'au moins un additif, qui, lorsqu'il est ajouté au fluide de travail, abaisse le point de congélation, c'est-à-dire une température à laquelle le fluide de travail passe d'un état liquide à un état solide.

4. Dispositif selon la revendication 2 ou selon les revendications 2 et 3,
**caractérisé en ce que** le moyen chauffant (10) utilise la chaleur résiduelle présente après la mise hors service du circuit de chaleur perdue dans l'évaporateur (2) et/ou dans le condenseur (3).

5. Dispositif selon la revendication 2 ou selon les revendications 2 et 3,
**caractérisé en ce que** le moyen chauffant (10) est réalisé sous forme de moyen chauffant à commande électrique.

6. Dispositif selon l'une quelconque des revendications 1 à 5,
**caractérisé en ce que** l'on prévoit en outre comme dispositif de protection antigel (4) un volume de compensation.

7. Dispositif selon la revendication 6,
**caractérisé en ce qu'**un réservoir d'alimentation (5) est réalisé sous forme de volume de compensation.

8. Dispositif selon la revendication 7,
**caractérisé en ce que** le réservoir d'alimentation (5) et un récipient de compensation de réfrigérant d'un système de refroidissement du véhicule sont réalisés sous forme séparée hydrauliquement l'un de l'autre en tant qu'un seul composant.

9. Dispositif selon l'une quelconque des revendications 1 à 8,
**caractérisé en ce que** l'on prévoit en outre en tant que dispositif de protection antigel (4) au moins une conduite de liaison flexible.

10. Dispositif selon l'une quelconque des revendications 1 à 9,
**caractérisé en ce qu'**en tant que dispositif de protection antigel, de plus au moins une conduite de liaison est réalisée dans une région entre le condenseur (3) et une pompe d'alimentation (12) en tant que conduite en plastique, notamment en polyamide.

11. Dispositif selon l'une quelconque des revendications 1 à 10,
**caractérisé en ce qu'**en tant que dispositif de protection antigel, de plus au moins une conduite de liaison est réalisée dans une région entre une pompe d'alimentation (12) et l'évaporateur (1) en tant que conduite en caoutchouc ou en plastique avec un renfort en tissu ou en fil métallique.

12. Utilisation d'un dispositif selon l'une quelconque des revendications précédentes dans un véhicule automobile, en particulier un véhicule utilitaire, comprenant un moteur à combustion interne et un système d'utilisation de la chaleur perdue, lequel convertit la chaleur présente dans la région du moteur à combustion interne et/ou contenue dans le gaz d'échappement au moins en partie en travail mécanique.
